# EUROPÄISCHE PATENTSCHRIFT

(11) **EP 1 833 927 B1**
(45) Veröffentlichungstag und Bekanntmachung des Hinweises auf die Patenterteilung: **14.04.2010**
(21) Anmeldenummer: 05794565.1
(22) Anmeldetag: 05.10.2005
(51) Int. Cl.: C09D 5/03

(54) **VERFAHREN UND ANLAGE ZUM BESCHICHTEN, INSBESONDERE ZUM LACKIEREN, VON GEGENSTÄNDEN**
Process and Device for particularly coating of objects
PROCEDE ET DISPOSITIF POUR REVETIR, EN PARTICULIER LAQUER, DES OBJETS

(30) Priorität: 24.11.2004 DE 102004056788
(43) Veröffentlichungstag der Anmeldung: 19.09.2007
(73) Patentinhaber: EISENMANN Anlagenbau GmbH & Co. KG, 71032 Böblingen (DE)
(72) Erfinder: SCHUSTER, Werner, 75395 Ostelsheim (DE); SCHWERER, Peter, 71083 Herrenberg (DE)
(74) Vertreter: Ostertag, Ulrich
(86) Internationale Anmeldenummer: PCT/EP2005/010699
(87) Internationale Veröffentlichungsnummer: WO 2006/056264

(56) Entgegenhaltungen:
- CH-A5- 631 635
- US-A- 5 206 313

## Beschreibung

Die Erfindung betrifft ein Verfahren zum Beschichten, insbesondere zum Lockieren von Gegenständen, bei dem das Beschichtungsmaterial zu einer Applikationseinrichtung befördert und von dieser in Pulverform abgegeben wird, sowie eine Anlage zum Beschichten von Gegenständen.

Das Pulverbeschichten, insbesondere das Lackieren, von Gegenständen und hier wiederum insbesondere das Lackieren von Fahrzeugkarosserien, gewinnt in jüngster Zeit zunehmendes Interesse. Ein besonders wichtiger Grund hierfür ist die Umweltfreundlichkeit, da bei der Pulverbeschichtung keine Lösemittel anfallen, deren Entsorgung oft mit großem apparativem Aufwand verbunden ist. Trotz dieses großen, offensichtlichen Vorteiles findet die Pulverbeschichtung bisher nur beschränkt Einsatz.

Dies ist darauf zurückzuführen, daß das Pulver auf dem Wege zur Applikationseinrichtung alle Strömungswege verunreinigt, so daß bei einem Wechsel des Beschichtungsmaterials, also beispielsweise bei einem Wechsel der Farbe des Lackpulvers, ein erheblicher Reinigungsaufwand nötig wird. Überall dort, wo in bunter Folge Gegenstände mit unterschiedlichen Beschichtungsmaterialien, insbesondere unterschiedlich gefärbten Lackpulvern, beaufschlagt werden sollen, ist daher der Einsatz der Pulverbeschichtung bisher noch wenig wirtschaftlich. Die zur Reinigung bei einem Wechsel des Beschichtungsmaterials erforderlichen Stillstandszeiten der Anlage sind einfach zu hoch.

Bei der Herstellung von Pulverbeschichtungsmaterial werden auch Verfahren verwendet, bei denen in einem Zwischenschritt größere pelletartige Teile entstehen. Ein solches Verfahren ist zum Beispiel in der US 5 206 313 A beschrieben, wo kristalline und nicht-kristalline Ausgangsmaterialien gemischt, erhitzt und zu Tabletten gepresst werden, wodurch pelletartige Teile entstehen, die noch teilweise kristallines Material enthalten. Dem schließt sich ein Pulverisierungsvorgang an.

Aufgabe der vorliegenden Erfindung ist es, ein Verfahren und eine Anlage der eingangs genannten Art zu schaffen, welche auch bei einem häufigen Wechsel des Beschichtungsmaterials, insbesondere der Farbe des verwendeten Lackpulvers, eine rationelle, kostengünstige Beschichtung ermöglichen.

Diese Aufgabe wird, was das Verfahren anlangt, mit dem im Patentanspruch 1 angegebenen Verfahren gelöst.

Erfindungsgemäß wird also das Beschichtungsmaterial zunächst in die Form von Pulverkörnern mit einer geeigneten Korngrößenverteilung gebracht. Danach werden die so gewonnenen Pulverkörner zu "kompaktierten Pulverkörpern" vereinigt. Darunter werden feste Gebilde verstanden, deren Abmessungen um ein vielfaches größer als diejenigen der einzelnen Pulverkörner sind, aus denen sie zusammengesetzt sind. Jeder dieser kompaktierten Pulverkörper umfasst also eine sehr große Anzahl einzelner Pulverkörner, wobei die Korngrößenverteilung der Pulverkörner, die in dem Pulverkörper vereinigt sind, auch nach dem Kompaktieren in etwa derjenigen entspricht, die später tatsächlich auf dem Gegenstand appliziert werden soll. In dieser kompaktierten Form, die entlang der Förderstrecke im wesentlichen keine "Spuren" in Form von Pulver hinterlässt und deshalb auch keine Reinigung der Förderstrecke erforderlich macht, werden die Pulverkörper in Richtung auf die Applikationseinrichtung befördert. Vor dem Eintreffen der Pulverkörper bei der Applikationseinrichtung werden diese wieder derart in Pulver zerlegt, daß die vor dem Kompaktieren vorliegende Korngrößenverteilung näherungsweise wieder hergestellt wird.

Um den gewünschten Vorteil der "sauberen" Beförderung erzielen zu können, dürfen die kompaktierten Pulverkörper eine Mindestgröße nicht unterschreiten; andernfalls würden wieder die bekannten Reinigungsprobleme entstehen, die bei herkömmlichen Pulverbeschichtungsanlagen vorgefunden werden. Erfindungsgemäß ist daher vorgesehen, daß die kompaktierten Pulverkörper eine Größe von mindestens einem Millimeter besitzen.

Die kompaktierten Pulverkörper können werksseitig vom Lackhersteller angeliefert oder vom Beschichter hergestellt werden. Durch die wechselseitige Bindung der einzelnen Pulverkörner im kompaktierten Pulverkörper können letztere durch die Förderwege, also beispielsweise Leitungen oder Schläuche, transportiert werden, ohne daß "unterwegs" einzelne Pulverkörner verloren gehen. Nur die verhältnismäßig kurzen Förderwege zwischen der Zerlegungseinrichtung, die aus den kompaktierten Pulverkörpern wieder Pulver macht, und der Applikationseinrichtung benötigen noch eine Reinigung beim Wechsel des Beschichtungsmaterials. Dies ist jedoch in sehr kurzer Zeit und mit geringem Aufwand möglich.

Die kompaktierten Pulverkörper können unter Einsatz von Druck oder Unterdruck hergestellt werden.

Alternativ oder zusätzlich ist es möglich, die kompaktierten Pulverkörper unter Temperatureinwirkung herzustellen, vorzugsweise unter Wärmeeinwirkung.

Auch ein Bindemittel kann bei der Herstellung der kompaktierten Pulverkörper verwendet werden.

Die kompaktierten Pulverkörper können bevorzugt die Form eines Granulats, von Pellets oder von Tabletten aufweisen. Die genaue Größe und auch die Form werden den jeweiligen Gegebenheiten angepasst, insbesondere auch der Art, in welcher die kompaktierten Pulverkörper befördert werden sollen.

So ist es beispielsweise möglich, die kompaktierten Pulverkörper hydraulisch zu fördern.

Alternativ kommt selbstverständlich auch eine pneumatische oder eine mechanische Förderung der Pulverkörper in Frage.

Auch für die Zerlegung der kompaktierten Pulverkörper in Pulver gibt es mehrere Optionen:

Bevorzugt wird, die kompaktierten Pulverkörper zur Zerlegung mechanisch zu mahlen.

Zusätzlich oder alternativ können die kompaktierten Pulverkörper zur Zerlegung einer Fremdenergie, insbesondere elektromagnetischer Strahlung oder Ultraschall, ausgesetzt werden.

Auch eine Vibration der kompaktierten Pulverkörper kann zur Zerlegung in Pulver führen.

Insbesondere dort, wo ein Bindemittel bei der Herstellung der kompaktierten Pulverkörper eingesetzt wurde, können letztere zur Zerlegung einem Lösemittel ausgesetzt werden. Dieses Lösemittel löst dann das Bindemittel aus dem kompaktierten Pulverkörper heraus, der dann wieder in das Ausgangspulver zerfällt.

Die Applikationseinrichtung kann das Beschichtungsmaterial als trockenes Pulver abgeben.

Insbesondere dort, wo zur Zerlegung der kompaktierten Pulverkörper Wasser als Lösemittel eingesetzt wird, ist es besonders günstig, wenn die Applikationseinrichtung das Beschichtungsmaterial als Aufschlämmung abgibt. Dann ist das zur Zerlegung der kompaktierten Pulverkörper eingesetzte Wasser gleichzeitig der Träger der Aufschlämmung.

Es ist in der Beschichtungstechnik üblich, vor Beginn der Beschichtung eines Gegenstandes die Menge des zur Beschichtung dieses Gegenstandes erforderlichen Beschichtungsmaterials abzumessen. Dies kann bei einer vorteilhaften Variante des erfindungsgemäßen Verfahrens dadurch geschehen, daß die Zahl der beförderten kompaktierten Pulverkörper erfasst wird. Um so kleiner diese kompaktierten Pulverkörper sind, um so genauer kann die Dosierung erfolgen. Dabei ist allerdings die oben schon erwähnte Untergrenze der Größe der kompaktierten Pulverkörper zu beachten.

Alternativ kann zur Dosierung des Beschichtungsmaterials das Gewicht der beförderten kompaktierten Pulverkörper erfasst werden.

Das erfindungsgemäße Verfahren eignet sich auch besonders gut zur Herstellung von Beschichtungen, die aus einer Mischung von Beschichtungsmaterialien bestehen. In diesem Falle können kompaktierte Pulverkörper unterschiedlicher Beschaffenheit verwendet werden, deren Pulver nach der Zerlegung vor der Zufuhr zur Applikationseinrichtung vermischt wird. Das Mischungsverhältnis der unterschiedlichen kompaktierten Pulverkörper kann wiederum durch Zählen oder ggf. auch Wiegen bestimmt werden.

Um ein kontinuierliches, unterbrechungsfreies Arbeiten zu ermöglichen, empfiehlt sich der Einsatz eines Verfahrens, bei dem mehrere Einrichtungen vorgesehen sind, mit denen die kompaktierten Pulverkörper zerlegt werden können, wobei jeweils eine Einrichtung sich im zerlegmodus, eine in einem Reinigungsmodus und eine in einem Beschickungsmodus befindet.

Um erfassen zu können, wann bei einem Wechsel des Beschichtungsmaterials der letzte kompaktierte Pulverkörper einer ersten Art in die Zerlegeinrichtung eingetreten ist, kann es sich empfehlen, zwischen diesem letzten kompaktierten Pulverkörper der ersten Art und dem ersten kompaktierten Pulverkörper einer zweiten Art mindestens einen Trennkörper einzufügen, der mindestens eine Eigenschaft aufweist, die aus der Entfernung detektierbar ist. Bei dieser Eigenschaft kann es sich um eine optische Eigenschaft, zum Beispiel die Farbe oder die Lichtdurchlässigkeit, um eine mechanische Eigenschaft, beispielsweise die Dichte, oder auch um eine magnetische Eigenschaft handeln. Für all diese Eigenschaften sind dem Fachmanne Detektoren bekannt, die in der Lage sind, einen vor ihnen vorbeigeführten Trennkörper zu erkennen und daraufhin ein Signal abzugeben.

Der Trennkörper kann vor der Zerlegeinrichtung ausgesondert und wieder zurückgeführt werden. Ist der Trennkörper aus einem geeigneten Material, beispielsweise ausschließlich aus Bindemittel, hergestellt, ist es auch möglich, den Trennkörper ebenso wie die kompaktierten Pulverkörper in Pulver zu zerlegen und aus der Applikationseinrichtung abzugeben.

Die oben genannte Aufgabe wird, was die Anlage angeht, durch die im Patentanspruch 26 angegebenen Merkmale gelöst.

Die Vorteile der erfindungsgemäßen Anlage entsprechen im wesentlichen den oben bereits genannten Vorteilen des erfindungsgemäßen Verfahrens.

Auch die zweckmäßigen Ausführungsformen der erfindungsgemäßen Anlage, die Gegenstand der Ansprüche 27 bis 45 sind, haben in einer der oben geschilderten Verfahrensvariante ihr Analogon, so daß auch diesbezüglich auf die oben genannten Vorteile verwiesen werden darf.

Ausführungsbeispiele der Erfindung werden nachfolgend anhand der Zeichnung näher erläutert; es zeigen
- Figur 1: schematisch eine Anlage zum Lackieren von Fahrzeugkarosserien;
- Figur 2: eine Ausschnittvergrößerung aus Figur 1;
- Figur 3: in der Draufsicht einen Mahlwerk-Revolver, der bei der Anlage der Figur 1 Verwendung findet;
- Figur 4: in größerem Maßstab als in Figur 1 den bei der dortigen Anlage verwendeten Roboter sowie die diesem benachbarten Teile der Lackzuführeinrichtung;
- Figur 5: im schematischen Axialschnitt einen mit einem Mahlwerke zu einer Einheit verbundenen Hochrotationszerstäuber.

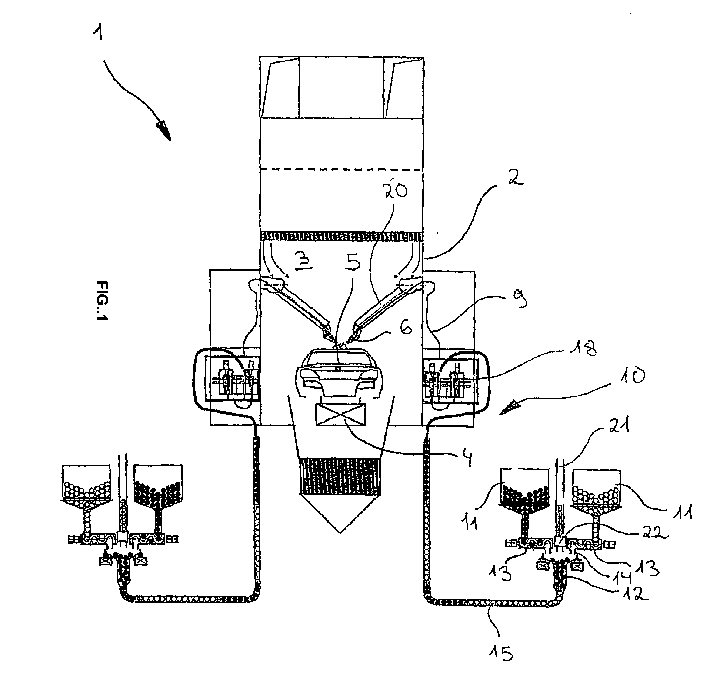

Die in Figur 1 dargestellte und insgesamt mit dem Bezugszeichen 1 versehene Lackieranlage umfasst eine an und für sich bekannte Lackierkabine 2, durch deren Innenraum 3 mit Hilfe eines nur schematisch dargestellten Transportsystemes 4 die zu lackierenden Fahrzeugkarosserien 5 transportiert werden können.

Die Lackieranlage 1 ist im wesentlichen symmetrisch zu ihrer Mittelebene aufgebaut; es genügt daher, nachfolgend nur die in Figur 1 rechts von der Mittelebene dargestellte Hälfte zu beschreiben.

Eine von einem Roboter 20 in ebenfalls bekannter Weise geführte Applikationseinrichtung 6 sprüht Lack in Pulverform auf die Fahrzeugkarosserie 5, die während dieses Vorganges stillstehen oder auch bewegt werden kann. Die Applikationseinrichtung 6 enthält eine Hochspannungselektrode, an welcher das Lackpulver vorbeigeführt und so ionisiert wird. Dieses Lackpulver schlägt sich dann bevorzugt an der auf Massepotential liegenden Fahrzeugkarosserie 5 nieder.

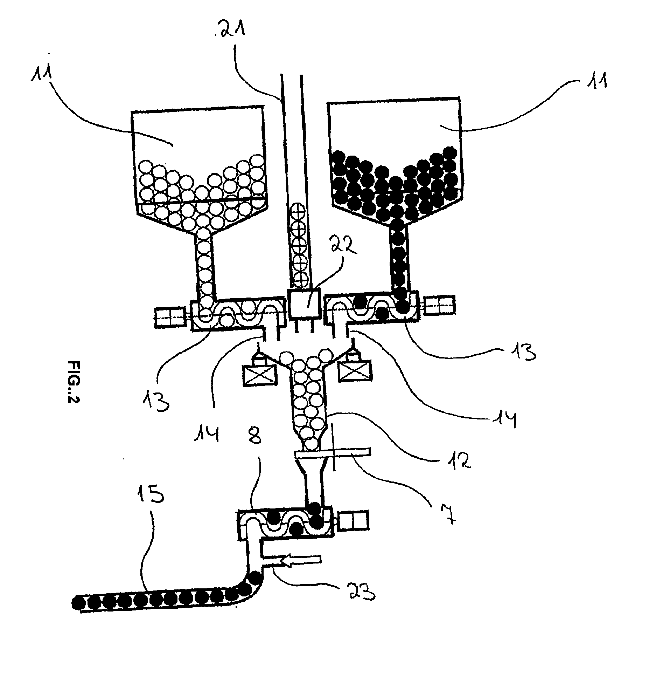

Die Besonderheit der dargestellten Lackieranlage 1 besteht darin, daß das von den Applikationseinrichtungen 6 versprühte Lackpulver nicht von einem verhältnismäßig weit entfernten Vorratsbehälter über einen langen Schlauch oder eine Leitung zugeführt wird. Es entsteht vielmehr in unmittelbarer Nähe der Applikationseinrichtungen 6, wie dies nachfolgend anhand der Figuren 2 bis 4 näher erläutert wird.

Jede Hälfte der Lackieranlage 1 besitzt eine insgesamt mit dem Bezugszeichen 10 versehene Lackzuführeinrichtung. Diese umfasst mehrere, im dargestellten Beispiel zwei Vorratsbehälter 11, die mit Lackpulvertabletten unterschiedlicher Farbe beschickt werden können. Unter einer "Lackpulvertablette" wird ein festes Gebilde verstanden, dessen Größe etwa der Größe von derzeit auf dem Markt befindlichen Spültabletten entspricht. Es ist durch Kompression oder in anderer, weiter unten angesprochener Weise aus herkömmlichen Lackpulver mit der für den Lackierprozess geeigneten Korngrößenverteilung hergestellt.

Die Lackpulvertabletten gelangen aus dem Inneren der Vorratsbehälters 11 jeweils in eine horizontal angeordnete, motorisch angetriebene Führungsschnecke 13 und werden von dieser einzeln einem unteren Auslaß 14 zugeführt. Die Auslässe 14 befinden sich über dem Fülltrichter einer Wägeeinrichtung 12. Diese ist über einen beweglichen Schieber 7 mit dem Einlaß eines Wendelförderers 8 verbunden.

Der Auslaß des Wendelförderers 8 ist seinerseits mit einer Zuführleitung 15 verbunden, die zu einem Mahlwerks-Revolver 18 führt. Dieser ist in unmittelbarer Nähe des Roboters 20, so nahe wie möglich an der Applikationseinrichtung 6, angeordnet.

Zwischen den beiden Vorratsbehältern 11 ist ein Vorratsbehälter 21 angeordnet, der sogenannte Trennkörper enthält. Diese Trennkörper können dieselbe Gestalt wie die Lackpulvertabletten aufweisen, besitzen jedoch eine Eigenschaft, die es möglich macht, ihre Position in einer Leitung oder einem Schlauch berührungslos von außen zu ermitteln. Die Trennkörper können hierzu besondere mechanische, magnetische oder optische Eigenschaften aufweisen, in denen sie sich von den Lackpulvertabletten unterscheiden. Beispielsweise können sie eine andere Dichte, eine andere Farbe oder eine von Licht durchstrahlbare Öffnung besitzen.

Am unteren Ende des Vorratsbehälters 21 befindet sich eine steuerbare Klappe 22, über deren Auslaß die Trennkörper einzeln in die Wägeeinrichtung 12 abgegeben werden können.

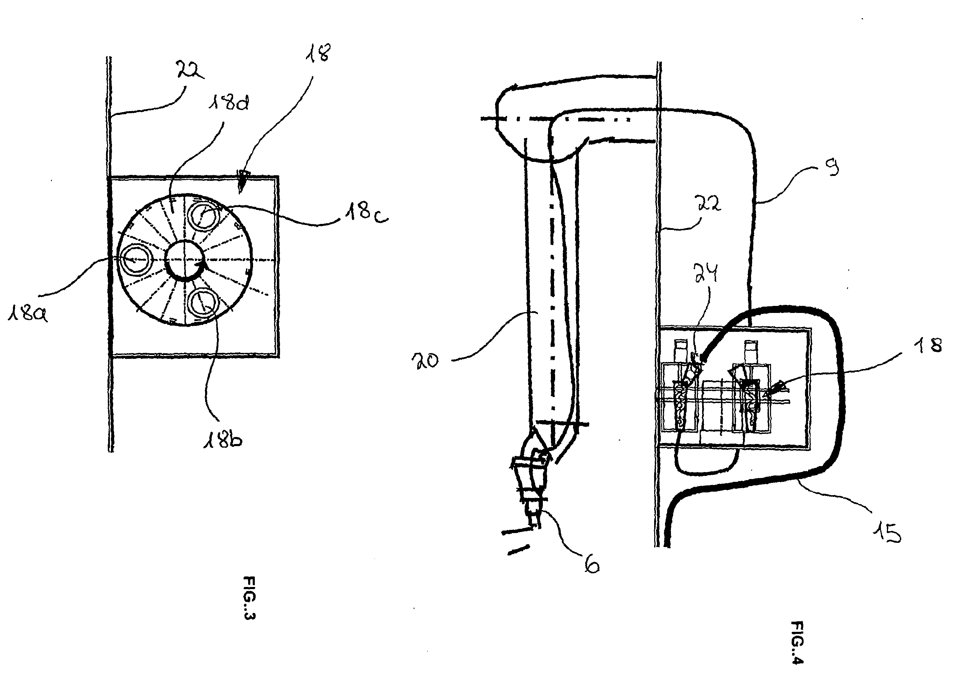

Der Mahlwerks-Revolver 18 ist in sehr schematisierter Weise in Draufsicht in Figur 3 abgebildet. Er umfasst drei Mahlwerke 18a, 18b, 18c, die in einem Winkelabstand von 120° zueinander in einem um seine Achse motorisch verdrehbaren, zylindrischen Revolver 18d montiert sind. Der Mahlwerks-Revolver 18 ist außerhalb der durch eine Seitenwand 22 begrenzten Lackierkabine 2 angeordnet. Das Mahlwerk 18a befindet sich in einer Beschickungsstelle, in der es mit der Zuführleitung 15 verbunden ist. Das Mahlwerk 18b befindet sich in einer Reinigungstelle, an der es mit Druckluft ausgeblasen oder in sonstiger Weise gereinigt werden kann. Das Mahlwerk 18c schließlich nimmt eine Arbeitsstellung ein, in welcher es über einen Schlauch 9 mit der Applikationseinrichtung 6 verbunden ist.

Die oben beschriebene Lackieranlage 1 arbeitet wie folgt:

Zunächst werden die Vorratsbehälter 11 mit Lackpulvertabletten angefüllt.

Wird nunmehr eine Fahrzeugkarosserie 5 mit Hilfe des Transportsystemes 4 in die Lackierkabine 2 eingebracht, so wird die zum Lackieren erforderliche Lackmenge entweder automatisch durch Ablesen des jeweiligen Karosserietyps oder manuell in die Anlagensteuerung eingegeben. Nun beginnt die Transportschnecke 13 des die richtigen Lackpulvertabletten enthaltenden Vorratsbehälters 11 zu arbeiten und eine solche Anzahl von Lackpulvertabletten in die Wägeeeinrichtung 12 abzugeben, bis das der erforderlichen Lackmenge entsprechende Gewicht erreicht ist.

Jetzt wird der Schieber 7 der Wägeeinrichtung 12 geöffnet; die Lackpulvertabletten werden von dem Wendelförderer 8 in die Zuführleitung 15 eingebracht und durch diese hindurch in einer beliebigen Weise zum Mahlwerk 18a des Mahlwerk-Revolvers 18 befördert. Bevorzugt wird dabei die dargestellte Beförderung nach Art eines Molches bzw. nach Rohrpostart unter Verwendung eines Schiebemediums, welches die Lackpulvertabletten vor sich herschiebt. Hierzu mündet in der Nähe des Wendelförderers 8 in die Zuführleitung 15 ein Anschluß 23 für das Schiebemedium, bei dem es sich vorzugsweise um Druckluft handelt.

Ggf. können auch Molche eingesetzt werden, wie dies aus der Lackiertechnik an und für sich bekannt ist. Die Einrichtungen, die zum Auslaß des Schiebemediums aus der Zuführleitung 15 erforderlich sind, sowie die ggf. bei Einsatz von Molchen notwendigen Molchstationen sind in der Zeichnung nicht dargestellt; sie sind dem Fachmanne bekannt.

Die Lackpulvertabletten durchqueren die Zuführleitung 15, die eine erhebliche Länge haben kann, ohne nennenswerten Abrieb, d. h., ohne nennenswerte Verschmutzung der Zuführleitung 15.

Nunmehr wird der Mahlwerks-Revolver 18 in Figur 3 um 120° gegen den Uhrzeigersinn verdreht. Dabei gelangt das mit Lackpulvertabletten beschickte Mahlwerk 18a in die Arbeitsstellung, die zuvor vom Mahlwerk 18c eingenommen worden war. Das Mahlwerk 18c dreht sich an die Reinigungsstelle, die in Figur 3 vom Mahlwerk 18b eingenommen wird. Letzteres Mahlwerk 18b schließlich nimmt die Beschickungsstelle ein, die in Figur 3 das Mahlwerk 18a besitzt.

Das nun in der Arbeitsstellung befindliche Mahlwerk 18a, das mit Lackpulvertabletten beschickt ist, beginnt nunmehr das Lackpulver zu zermahlen und stellt dabei die ursprüngliche Korngrößenverteilung wieder im wesentlichen unverändert her. Auf kürzestem Wege wird das so entstandene Lackpulver nunmehr über den Schlauch 9 der Applikationseinrichtung 6 zugeführt, die mit dem Lackiervorgang beginnen kann. Wenn der Lackiervorgang beendet ist, also alle zu lackierenden Flächen der Fahrzeugkarosserie 5 beschichtet sind, ist der Vorrat an Lackpulvertabletten innerhalb des Mahlwerkes 18a bis auf einen kleinen Überschuß verbraucht.

Zwischenzeitlich wurde das Mahlwerk 18b, das sich nunmehr in der Position des Mahlwerkes 18a der Figur 3 befindet, neu mit Lackpulvertabletten angefüllt, deren Gewicht erneut der Menge von Lackpulver entspricht, die für die nächste zu lackierende Fahrzeugkarosserie 5 benötigt wird.

Bei der in Figur 1 dargestellten Lackieranlage 1 wird ein Farbwechsel dadurch durchgeführt, dass in der Wägeeinrichtung 12 auf die letzte, die "alte" Farbe aufweisende Lackpulvertablette ein Trennkörper aufgesetzt wird, indem die Auslaßklappe 22 des Vorratsbehälters 21 kurz geöffnet wird. Sodann wird die Beschickung der Wägeeinrichtung 12 mit Lackpulvertabletten einer anderen Farbe aus dem anderen Vorratsbehälter 11 fortgesetzt. In der Nähe der Beschickungsstelle des Mahlwerk-Roboters 18 befindet sich ein Detektor 24, der in der Lage ist, die kennzeichnende Eigenschaft der Trennkörper, also deren abweichende optische, mechanische oder magnetische Eigenschaft, zu erkennen und dadurch zu erfassen, wann die letzte Lackpulvertablette der "alten" Farbe passiert und deshalb die Verdrehung des Mahlwerk-Revolvers 18 einzuleiten ist.

Eine Reinigung der Zuführleitung 15 ist bei diesem Farbwechsel normalerweise nicht erforderlich. Das zuvor aktive Mahlwerk 18a, 18b, 18c wird in derjenigen Position des Mahlwerks-Revolvers 18, die in Figur 3 von dem Mahlwerk 18b eingenommen wird, gereinigt, beispielsweise durch Blasen. In ähnlicher Weise werden die sehr kurzen Pulverströmungswege im Schlauch 9 zwischen dem jeweils in Arbeitsstellung befindlichen Mahlwerk und der Applikationseinrichtung 6 gereinigt. Diese verglichen mit dem Stande der Technik geringfügigen Reinigungsarbeiten können sehr schnell und ohne großen Aufwand durchgeführt werden.

Auf diese Weise können bunte Folgen von Fahrzeugkarosserien 5 ohne spürbare Betriebsunterbrechungen hintereinander lackiert werden.

Die Trennkörper können an dem Mahlwerk-Revolver 18 ausgeschleust und zum Vorratsbehälter 21 zurückgeführt werden. Sie können jedoch auch zermahlen und über die Applikationseinrichtung 6 versprüht werden, wenn sie aus einem hierfür geeigneten Material, beispielsweise aus Bindemittel, bestehen.

Es ist auch möglich, Mischfarben zu erzeugen, indem mehrere der parallel liegenden Vorratsbehälter 11 zur Lackierung einer Fahrzeugkarosserie 5 16 in Funktion genommen werden. Es wird dann, je nach der gewünschten Mischfarbe, eine bestimmte Anzahl von Lackpulvertabletten aus dem einen Vorratsbehälter 11 und eine entsprechende Zahl von Lackpulvertabletten der anderen Farbe aus dem anderen Vorratsbehälter 11 in die Wägeeinrichtung 12 gegeben eingewogen. Selbstverständlich muß das Farbpulver, das durch Zermahlen dieser Lackpulvertabletten im Mahlwerks-Revolver 18 entsteht, noch gründlich vermischt werden, damit tatsächlich eine homogene Pulvermischung vor der Applikation entsteht.

Die zur Abmessung einer bestimmten Lackmenge eingesetzte Wägeeinrichtung 12 kann auch durch eine Zähleinrichtung ersetzt werden, welche die sie passierenden Lackpulvertabletten, die jeweils ein bestimmtes Gewicht besitzen, abzählt.

Bei den oben beschriebenen Ausführungsbeispielen werden Lackpulvertabletten eingesetzt, die jeweils eine Gewicht von einigen zehn Gramm besitzen. Grundsätzlich ist es jedoch auch möglich, kleinere "Einheiten" aus kompaktiertem Lackpulver einzusetzen, beispielsweise Pellets oder Granulat. Die Mindestgröße dieser kompaktierten Pulverkörper ist in jedem Falle experimentell leicht zu ermitteln: Bei ihrer Unterschreitung ist die gewünschte "Farbreinheit" der Anlage nicht mehr gewährleistet. Unter "Farbreinheit" wird hier verstanden, daß bei der Passage der kompaktierten Pulverkörper keine Pulververunreinigungen in den verschiedenen Leitungen zurückbleiben und ein Reinigungsprozess daher entbehrlich ist. Im allgemeinen sollte die Mindestgröße einen Durchmesser bzw. eine äquivalente Dimension von einem Millimeter nicht unterschreiten.

Die kompaktierten Pulverkörper können grundsätzlich beliebige Form besitzen. In Frage kommen insbesondere Kugelform, Zylinderform oder Drageeform; die Wahl der Form im Einzelfall erfolgt unter Berücksichtigung des Lackmaterials, der Art der Förderung der kompaktierten Pulverkörper sowie der Art, in der die kompaktierten Pulverkörper wieder zerkleinert werden.

Als Förderart für die kompaktierten Pulverkörper wurde oben ein Schiebemedium erwähnt. Es kommen jedoch erneut beliebige Förderarten in Frage, seien diese nunmehr mechanisch, pneumatisch, hydraulisch, durch Druck oder Unterdruck.

Die Zerkleinerung der kompaktierten Pulverkörper kann auf andere Weise als durch die oben erwähnten Mahlwerke 18a, 18b, 18c erfolgen. So ist es grundsätzlich denkbar, die Rückführung der kompaktierten Pulverkörper in die Pulverform durch Zufuhr von Fremdenergie wie Ultraschall, Laserlicht, Hochfrequenzwellen, mechanische Vibration und dgl., herbeizuführen.

Sind die kompaktierten Pulverkörper unter Verwendung eines Bindemittels hergestellt, kommt auch eine Zerkleinerung unter Verwendung von geeigneten Lösemittel in Frage, insbesondere unter Verwendung von Wasser. In diesem Falle kann statt eines trockenen Pulvers auch eine Aufschlämmung ("slurry") hergestellt und direkt zum Lackieren verwendet werden.

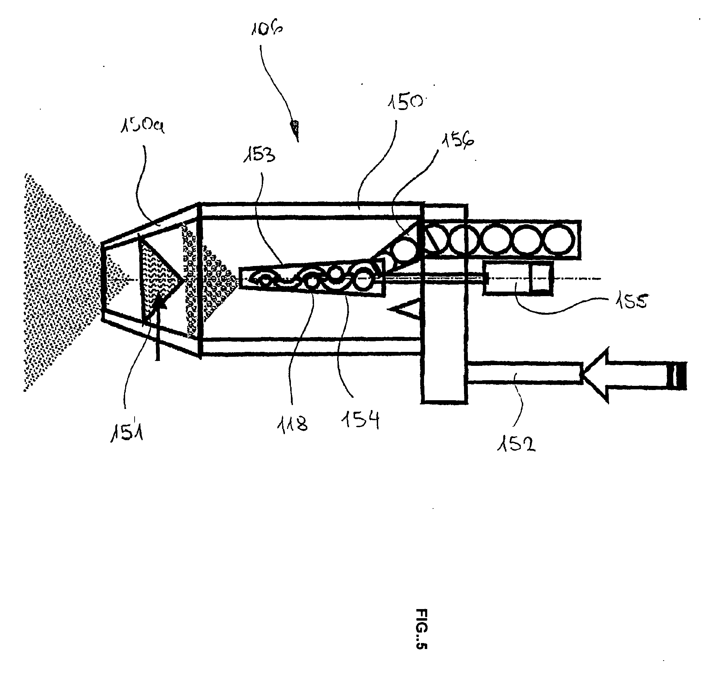

Figur 5 zeigt in sehr schematischer Weise eine Applikationseinrichtung 106, in welche ein Mahlwerk 118 integriert ist. In dem konisch zulaufenden vorderen Endbereich 150a des gemeinsamen Gehäuses 150 befindet sich in bekannter Weise eine Luftturbine 151, der über einen rückwärtigen Druckluftanschluß 152 Druckluft zugeführt werden kann und auf diese Weise in schnelle Drehung versetzt wird. Im zylindrischen Bereich 150b des Gehäuses 150 befindet sich das Mahlwerk 118, das ein konisch nach vorne sich verjüngendes Mahlwerksgehäuse 153 aufweist. In dem Mahlwerksgehäuse 153 ist eine Förderschnecke 154 drehbar gelagert, deren Schneckengänge zum vorderen Ende hin niedriger und enger werden. Die Förderschnecke 154 ist durch einen Motor 155 verdrehbar. Die von dem Schlauch 9 (vgl. Figuren 1 und 4) kommenden kompaktierten Pulverkörper treten über einen Einlaß 156 an dem hinteren, im Durchmesser größeren Ende des Mahlwerksgehäuses 153 ein.

Die Applikationseinrichtung 106 arbeitet wie folgt:

Durch Zufuhr von Druckluft über den Anschluß 152 werden die Luftturbine 151 und der damit verbundene Zerstäubungs-Drehteller in Drehung versetzt. Die kompaktierten Pulverkörper werden über den Eingang 156 dem weiteren Bereich des Mahlwerksgehäuses 153 zugeführt, dort von der Förderschnecke 154 erfaßt und in Richtung auf das engere, vordere Ende des Mahlwerksgehäuses 153 transportiert. Aufgrund der Geometrie der Förderschnecke 154 und des Mahlwerksgehäuses 153 werden die kompaktierten Pulverkörper dabei zerbrochen und zerfallen wieder in das Pulver, aus dem sie zusammengesetzt sind. Das Pulver wird am vorderen, offenen Ende des Mahlwerksgehäuses 153 in der schematisch dargestellten Weise abgegeben und gelangt dann in den Bereich des von der Luftturbine 151 angetriebenen Drehtellers, wird auf diese Weise in der ebenfalls schematisch dargestellten Form zerstäubt und gegen den zu lackierenden Gegenstand gerichtet.

Bei einem in der Zeichnung nicht dargestellten Ausführungsbeispiel werden sowohl das Mahlwerk 118 als auch die Turbine 151 von demselben Motor angetrieben.

## Patentansprüche

1. Verfahren zur Beschichtung von Gegenständen, bei dem das Beschichtungsmaterial zu einer Applikationseinrichtung (6; 106) befördert und von dieser in Pulverform abgegeben wird,
wobei
a) das Beschichtungsmaterial in die Form von Pulverkörnern mit einer geeigneten Korngrößenverteilung gebracht wird,
b) die so gewonnenen Pulverkörner zu kompaktierten Pulverkörpern von mindestens einem Millimeter Größe vereinigt werden,
c) in der kompaktierten Form in Richtung auf die Applikationseinrichtung (6; 106) gefördert werden, und
d) vor dem Eintreffen der Pulverkörper bei der Applikationseinrichtung (6; 106) diese wieder derart in Pulver zerlegt werden, dass die vor dem Kompaktieren vorliegende Korngrößenverteilung näherungsweise wieder hergestellt wird.

2. Verfahren nach Anspruch 1, **dadurch gekennzeichnet, dass** die kompaktierten Pulverkörper unter Einsatz von Druck oder Unterdruck hergestellt werden.

3. Verfahren nach Anspruch 1 oder 2, **dadurch gekennzeichnet, dass** die kompaktierten Pulverkörper unter Temperatureinwirkung hergestellt werden.

4. Verfahren nach Anspruch 3, **dadurch gekennzeichnet, dass** die Herstellung der kompaktierten Pulverkörper unter Einwirkung von Wärme erfolgt.

5. Verfahren nach einem der vorhergehenden Ansprüche, **dadurch gekennzeichnet, dass** bei der Herstellung der kompaktierten Pulverkörper ein Bindemittel verwendet wird.

6. Verfahren nach einem der vorhergehenden Ansprüche, **dadurch gekennzeichnet, dass** die kompaktierten Pulverkörper die Form eines Granulats, von Pellets oder von Tabletten aufweisen.

7. Verfahren nach einem der vorhergehenden Ansprüche, **dadurch gekennzeichnet, dass** die kompaktierten Pulverkörper hydraulisch befördert werden.

8. Verfahren nach einem der Ansprüche 1 bis 6, **dadurch gekennzeichnet, dass** die kompaktierten Pulverkörper pneumatisch befördert werden.

9. Verfahren nach einem der Ansprüche 1 bis 6, **dadurch gekennzeichnet, dass** die kompaktierten Pulverkörper mechanisch befördert werden.

10. Verfahren nach einem der vorhergehenden Ansprüche, **dadurch gekennzeichnet, dass** die kompaktierten Pulverkörper zur Zerlegung mechanisch gemahlen werden.

11. Verfahren nach einem der Ansprüche 1 bis 9, **dadurch gekennzeichnet, dass** die kompaktierten Pulverkörper zur Zerlegung einer Fremdenergie ausgesetzt werden.

12. Verfahren nach Anspruch 11, **dadurch gekennzeichnet, dass** die Fremdenergie elektromagnetische Strahlung oder Ultraschall ist.

13. Verfahren nach einem der Ansprüche 1 bis 9, **dadurch gekennzeichnet, dass** die kompaktierten Pulverkörper zur Zerlegung einer Vibration ausgesetzt werden.

14. Verfahren nach einem der ansprüche 1 bis 9, **dadurch gekennzeichnet, dass** die kompaktierten Pulverkörper zur Zerlegung einem Lösemittel ausgesetzt werden.

15. Verfahren nach einem der vorhergehenden Ansprüche, **dadurch gekennzeichnet, dass** die Applikationseinrichtung (6) das Beschichtungsmaterial als trockenes Pulver abgibt.

16. Verfahren nach einem der Ansprüche 1 bis 14, **dadurch gekennzeichnet, dass** die Applikationseinrichtung (6) das Beschichtungsmaterial als Aufschlämmung abgibt.

17. Verfahren nach einem der vorhergehenden Ansprüche, **dadurch gekennzeichnet, dass** zur Dosierung des Beschichtungsmaterials die Zahl der beförderten kompaktierten Pulverkörper erfasst wird.

18. Verfahren nach einem der Ansprüche 1 bis 16, **dadurch gekennzeichnet, dass** zur Dosierung des Beschichtungsmaterials das Gewicht der beförderten kompaktierten Pulverkörper erfasst wird.

19. Verfahren nach einem der vorhergehenden Ansprüche, **dadurch gekennzeichnet, dass** kompaktierte Pulverkörper unterschiedlicher Beschaffenheit verwendet werden, deren Pulver nach der Zerlegung vor der Zufuhr zur Applikationseinrichtung vermischt wird.

20. Verfahren nach Anspruch 19, **dadurch gekennzeichnet, dass** die unterschiedliche Beschaffenheit eine unterschiedliche Farbe ist.

21. Verfahren nach einem der vorhergehenden Ansprüche, **dadurch gekennzeichnet, dass** mehrere Einrichtungen vorgesehen sind, mit denen die kompaktierten Pulverkörper zerlegt werden können, wobei jeweils eine Einrichtung sich in einem Zerlegmodus, eine in einem Reinigungsmodus und eine in einem Beschickungsmodus befindet.

22. Verfahren nach einem der vorhergehenden Ansprüche, **dadurch gekennzeichnet, dass** beim Wechsel des Beschichtungsmaterials zwischen dem letzten kompaktierten Pulverkörper einer ersten Art und dem ersten kompaktierten Pulverkörper einer zweiten Art mindestens ein Trennkörper eingefügt wird, der mindestens eine Eigenschaft aufweist, die aus der Entfernung detektierbar ist.

23. Verfahren nach Anspruch 22, **dadurch gekennzeichnet, dass** der Trennkörper nach der Beförderung zwischen kompaktierten Pulverkörpern unterschiedlicher Art wieder zurückgeführt wird.

24. Verfahren nach Anspruch 22, **dadurch gekennzeichnet, dass** der Trennkörper ebenso wie die kompaktierten Pulverkörper in Pulver zerlegt und über die Applikationseinrichtung abgegeben wird.

25. Verfahren nach einem der vorhergehenden Ansprüche, **dadurch gekennzeichnet, dass** es zum Lackieren von Gegenständen vorgesehen ist.

26. Anlage zur Beschichtung von Gegenständen mit
- einer Applikationseinrichtung (6; 106), welche das Beschichtungsmaterial in Pulverform abgibt;
- einer Kompaktierungseinrichtung, in welcher das in Pulverform mit einer geeigneten Korngrößenverteilung vorliegende Pulver zu Pulverkörpern von mindestens einem Millimeter Größe kompaktiert wird;
- einer Zuführeinrichtung (10), welche das Beschichtungsmaterial der Applikationseinrichtung (6; 106) von mindestens einem Vorratsbehälter aus, in welchem die kompaktierten Pulverkörper bevorratet werden, zuführt;
wobei
- die Zuführeinrichtung (10) so ausgestaltet ist, dass sie das Beschichtungsmaterial in Form kompaktierter Pulverkörper befördert; und
- am der Applikationseinrichtung (6; 106) zugewandten Ende der Zuführeinrichtung (10) eine Zerlegeeinrichtung (18; 118) vorgesehen ist, welche die kompaktierten Pulverkörper in Pulver zerlegt, derart, dass
- bei der Applikationseinrichtung (6; 106) das Pulver wieder im wesentlichen in der Korngrößenverteilung vorliegt, die es vor dem Kompaktieren aufwies.

27. Anlage nach Anspruch 26, **dadurch gekennzeichnet, dass** die Kompaktierungseinrichtung eine Presse umfasst.

28. Anlage nach Anspruch 26 oder 27, **dadurch gekennzeichnet, dass** die Kompaktierungseinrichtung eine Wärmequelle umfasst.

29. Anlage nach einem der Ansprüche 26 bis 28, **dadurch gekennzeichnet, dass** die Kompaktierungseinrichtung eine Bindemittel-Zugabeeinrichtung umfasst, welche dem zu kompaktierenden pulverförmigen Beschichtungsmaterial ein Bindemittel beigibt.

30. Anlage nach einem der Ansprüche 26 bis 29, **dadurch gekennzeichnet, dass** die Zuführeinrichtung (10) eine hydraulische Fördereinrichtung umfasst.

31. Anlage nach einem der Ansprüche 26 bis 29, **dadurch gekennzeichnet, dass** die Zuführeinrichtung (10) eine pneumatische Fördereinrichtung umfasst.

32. Anlage nach einem der Ansprüche 26 bis 29, **dadurch gekennzeichnet, dass** die Zuführeinrichtung (10) eine mechanische Fördereinrichtung umfasst.

33. Anlage nach einem der Ansprüche 26 bis 32, **dadurch gekennzeichnet, dass** die Zerlegeinrichtung (18) mindestens ein Mahlwerk (18a, 18b, 18c) umfasst.

34. Anlage nach einem der Ansprüche 26 bis 33, **dadurch gekennzeichnet, dass** die Zerlegeinrichtung mindestens eine Quelle von Fremdenergie umfasst.

35. Anlage nach Anspruch 34, **dadurch gekennzeichnet, dass** die Fremdenergie elektromagnetische Strahlung oder Ultraschall ist.

36. Anlage nach einem der Ansprüche 26 bis 35, **dadurch gekennzeichnet, dass** die Zerlegeinrichtung (18) mindestens einen Vibrator umfasst.

37. Anlage nach einem der Ansprüche 26 bis 36, **dadurch gekennzeichnet, dass** die Zerlegeinrichtung (18) mindestens eine Lösemittel-Zugabeeinrichtung umfasst, welche den kompaktierten Pulverkörpern Lösemittel zugibt.

38. Anlage nach einem der Ansprüche 26 bis 37, **dadurch gekennzeichnet, dass** sie eine Zähleinrichtung für die Zahl der von der Zuführeinrichtung (10) beförderten kompaktierten Pulverkörper umfasst.

39. Anlage nach einem der Ansprüche 26 bis 38, **dadurch gekennzeichnet, dass** sie eine Wägeeinrichtung (12) für das Gewicht der von der Zuführeinrichtung (10) beförderten kompaktierten Pulverkörper umfasst.

40. Anlage nach einem der Ansprüche 26 bis 39, **dadurch gekennzeichnet, dass** zwischen der Zerlegeinrichtung (18) und der Applikationseinrichtung (6) eine Mischeinrichtung vorgesehen ist, welche das aus kompaktierten Pulverkörpern unterschiedlicher Art entstandene Pulver vermischt.

41. Anlage nach einem der Ansprüche 26 bis 40, **dadurch gekennzeichnet, dass** mehrere Einrichtungen (18a, 18b, 18c) vorgesehen sind, mit denen die kompaktierten Pulverkörper zerlegt werden können, wobei jeweils eine Einrichtung sich in einem zerlegmodus, eine in einem Reinigungsmodus und eine in einem Beschickungsmodus befindet.

42. Anlage nach einem der Ansprüche 26 bis 41, **dadurch gekennzeichnet, dass** eine Trennkörper-Einführeinrichtung (21, 22) vorgesehen ist, mit welcher zwischen kompaktierten Pulverkörpern unterschiedlicher Art mindestens ein Trennkörper einfügbar ist, der mindestens eine Eigenschaft aufweist, die aus der Entfernung detektierbar ist.

43. Anlage nach einem der Ansprüche 26 bis 42, **dadurch gekennzeichnet, dass** die Zerlegeinrichtung (118) und die Applikationseinrichtung (106) zu einer baulichen Einheit zusammengefasst sind.

44. Anlage nach Anspruch 43, **dadurch gekennzeichnet, dass** die Zerlegeinrichtung (118) ein Mahlwerk und die Applikationseinrichtung (106) ein Hochrotationszerstäuber ist, und dass das Mahlwerk (118) und der Hochrotationszerstäuber (106) von demselben Motor antreibbar sind.

45. Anlage nach einem der Ansprüche 26 bis 44, **dadurch gekennzeichnet, dass** sie zum Lackieren von Gegenständen vorgesehen ist.

## Claims

1. A method for coating objects, in which the coating material is conveyed to an application device (6; 106) and released therefrom in powder form,
wherein
a) the coating material is converted into the form of powder grains with a suitable grain size distribution,
b) the powder grains obtained in this manner are combined to form compacted powder bodies of a size of at least one millimetre,
c) are conveyed in the compacted form towards the application device (6; 106), and
d) before the powder bodies arrive at the application device (6; 106) they are broken back down into a powder in such a manner that the grain size distribution prevailing before compaction is approximately recreated.

2. A method according to claim 1, **characterised in that** the compacted powder bodies are produced using pressure or a partial vacuum.

3. A method according to claim 1 or claim 2, **characterised in that** the compacted powder bodies are produced by the action of temperature.

4. A method according to claim 3, **characterised in that** the compacted powder bodies are produced by the action of heat.

5. A method according to any one of the preceding claims, **characterised in that** a binder is used in the production of the compacted powder bodies.

6. A method according to any one of the preceding claims, **characterised in that** the compacted powder bodies assume the form of granules, pellets or tablets.

7. A method according to any one of the preceding claims, **characterised in that** the compacted powder bodies are hydraulically conveyed.

8. A method according to any one of claims 1 to 6, **characterised in that** the compacted powder bodies are pneumatically conveyed.

9. A method according to any one of claims 1 to 6, **characterised in that** the compacted powder bodies are mechanically conveyed.

10. A method according to any one of the preceding claims, **characterised in that** the compacted powder bodies are broken up by mechanical grinding.

11. A method according to any one of claims 1 to 9, **characterised in that** the compacted powder bodies are broken up by exposure to external energy.

12. A method according to claim 11, **characterised in that** the external energy is electromagnetic radiation or ultrasound.

13. A method according to any one of claims 1 to 9, **characterised in that** the compacted powder bodies are broken up by exposure to vibration.

14. A method according to any one of claims 1 to 9, **characterised in that** the compacted powder bodies are broken up by exposure to a solvent.

15. A method according to any one of the preceding claims, **characterised in that** the application device (6) releases the coating material as a dry powder.

16. A method according to any one of claims 1 to 14, **characterised in that** the application device (6) releases the coating material as a suspension.

17. A method according to any one of the preceding claims, **characterised in that** the coating material is metered by detecting the number of conveyed compacted powder bodies.

18. A method according to any one of claims 1 to 16, **characterised in that** the coating material is metered by detecting the weight of the conveyed compacted powder bodies.

19. A method according to any one of the preceding claims, **characterised in that** compacted powder bodies of a different nature are used, the powders of which, once broken down, are mixed before being supplied to the application device.

20. A method according to claim 19, **characterised in that** the different nature is a different colour.

21. A method according to any one of the preceding claims, **characterised in that** a plurality of devices are provided, with which the compacted powder bodies may be broken down, wherein in each case one device is in breaking down mode, one is in cleaning mode and one is in feeding mode.

22. A method according to any one of the preceding claims, **characterised in that**, on changeover of the coating material, between the last compacted powder bodies of a first kind and the first compacted powder bodies of a second kind, at least one separating body is introduced which comprises at least one property which can be remotely detected.

23. A method according to claim 22, **characterised in that**, after being conveyed between compacted powder bodies of different kinds, the separating body is recirculated.

24. A method according to claim 22, **characterised in that**, like the compacted powder bodies, the separating body is broken down into powder and released via the application device.

25. A method according to any one of the preceding claims, **characterised in that** it is provided for painting objects.

26. An installation for coating objects comprising
- an application device (6; 106) which releases the coating material in powder form;
- a compaction device, in which the powder, which assumes powder form with a suitable grain size distribution, is compacted to form powder bodies of a size of at least one millimetre;
- a feed device (10) which feeds the coating material to the application device (6; 106) from at least one storage vessel in which the compacted powder bodies are stored; wherein
- the feed device (10) is designed such that it conveys the coating material in the form of compacted powder bodies; and
- at the end of the feed device (10) facing the application device (6; 106) a breaking down device (18; 118) is provided which breaks the compacted powder bodies down into powder in such a way that
- at the application device (6; 106) the powder again assumes substantially the grain size distribution which it exhibited before compaction.

27. An installation according to claim 26, **characterised in that** the compaction device comprises a press.

28. An installation according to claim 26 or claim 27, **characterised in that** the compaction device comprises a heat source.

29. An installation according to any one of claims 26 to 28, **characterised in that** the compaction device comprises a binder addition device which admixes a binder to the pulverulent coating material to be compacted.

30. An installation according to any one of claims 26 to 29, **characterised in that** the feed device (10) comprises a hydraulic conveying device.

31. An installation according to any one of claims 26 to 29, **characterised in that** the feed device (10) comprises a pneumatic conveying device.

32. An installation according to any one of claims 26 to 29, **characterised in that** the feed device (10) comprises a mechanical conveying device.

33. An installation according to any one of claims 26 to 32, **characterised in that** the breaking down device (18) comprises at least one grinder (18a, 18b, 18c).

34. An installation according to any one of claims 26 to 33, **characterised in that** the breaking down device comprises at least one source of external energy.

35. An installation according to claim 34, **characterised in that** the external energy is electromagnetic radiation or ultrasound.

36. An installation according to any one of claims 26 to 35, **characterised in that** the breaking down device (18) comprises at least one vibrator.

37. An installation according to any one of claims 26 to 36, **characterised in that** the breaking down device (18) comprises at least one solvent addition device which adds solvent to the compacted powder bodies.

38. An installation according to any one of claims 26 to 37, **characterised in that** it comprises a counting device for the number of compacted powder bodies conveyed by the feed device (10).

39. An installation according to any one of claims 26 to 38, **characterised in that** it comprises a weighing device (12) for the weight of the compacted powder bodies conveyed by the feed device (10).

40. An installation according to any one of claims 26 to 39, **characterised in that**, between the breaking down device (18) and the application device (6), a mixing device is provided which mixes the powder which has arisen from compacted powder bodies of different kinds.

41. An installation according to any one of claims 26 to 40, **characterised in that** a plurality of devices (18a, 18b, 18c) are provided, with which the compacted powder bodies may be broken down, wherein in each case one installation is in breaking down mode, one in cleaning mode and one in feeding mode.

42. An installation according to any one of claims 26 to 41, **characterised in that** a separation body introduction device (21, 22) is provided, with which at least one separating body may be introduced between compacted powder bodies of different kinds, which separation body exhibits at least one property which is remotely detectable.

43. An installation according to any one of claims 26 to 42, **characterised in that** the breaking down device (118) and the application device (106) are combined in a single structural unit.

44. An installation according to claim 43, **characterised in that** the breaking down device (118) is a grinder and the application device (106) a high-speed rotary atomiser, and **in that** the grinder (118) and the high-speed rotary atomiser (106) may be driven by the same motor.

45. An installation according to any one of claims 26 to 44, **characterised in that** it is provided for painting objects.

## Revendications

1. Procédé pour revêtir des objets, dans lequel le matériau de revêtement est convoyé vers un dispositif applicateur (6 ; 106) et est délivré par ce dernier, sous forme pulvérulente, sachant que
a) ledit matériau de revêtement est amené à la forme de grains de poudre présentant une répartition granulométrique adéquate,
b) les grains de poudre ainsi obtenus sont rassemblés en des corps pulvérulents compactés d'une taille d'au moins un millimètre
c) en étant convoyés, sous la forme compactée, en direction du dispositif applicateur (6 ; 106) et,
d) préalablement à la pénétration desdits corps pulvérulents, au niveau du dispositif applicateur (6 ; 106), lesdits corps sont de nouveau dispersés en une poudre, de manière à rétablir approximativement la répartition granulométrique se présentant avant le compactage.

2. Procédé selon la revendication 1, **caractérisé par le fait que** les corps pulvérulents compactés sont produits en ayant recours à une pression ou à une dépression.

3. Procédé selon la revendication 1 ou 2, **caractérisé par le fait que** les corps pulvérulents compactés sont produits par action thermique.

4. Procédé selon la revendication 3, **caractérisé par le fait que** la production des corps pulvérulents compactés a lieu sous l'action de la chaleur.

5. Procédé selon l'une des revendications précédentes, **caractérisé par le fait qu'**un liant est employé au stade de la production des corps pulvérulents compactés.

6. Procédé selon l'une des revendications précédentes, **caractérisé par le fait que** les corps pulvérulents compactés revêtent la forme d'un granulat, de pastilles ou de comprimés.

7. Procédé selon l'une des revendications précédentes, **caractérisé par le fait que** les corps pulvérulents compactés sont convoyés hydrauliquement.

8. Procédé selon l'une des revendications 1 à 6, **caractérisé par le fait que** les corps pulvérulents compactés sont convoyés pneumatiquement.

9. Procédé selon l'une des revendications 1 à 6, **caractérisé par le fait que** les corps pulvérulents compactés sont convoyés mécaniquement.

10. Procédé selon l'une des revendications précédentes, **caractérisé par le fait que** les corps pulvérulents compactés sont broyés mécaniquement en vue de la dispersion.

11. Procédé selon l'une des revendications 1 à 9, **caractérisé par le fait que** les corps pulvérulents compactés sont soumis à une énergie extérieure en vue de la dispersion.

12. Procédé selon la revendication 11, **caractérisé par le fait que** l'énergie extérieure se présente comme un rayonnement électromagnétique ou comme des ultrasons.

13. Procédé selon l'une des revendications 1 à 9, **caractérisé par le fait que** les corps pulvérulents compactés sont soumis à une vibration en vue de la dispersion.

14. Procédé selon l'une des revendications 1 à 9, **caractérisé par le fait que** les corps pulvérulents compactés sont soumis à l'action d'un solvant en vue de la dispersion.

15. Procédé selon l'une des revendications précédentes, **caractérisé par le fait que** le dispositif applicateur (6) délivre le matériau de revêtement sous la forme d'une poudre sèche.

16. Procédé selon l'une des revendications 1 à 14, **caractérisé par le fait que** le dispositif applicateur (6) délivre le matériau de revêtement sous la forme d'une suspension.

17. Procédé selon l'une des revendications précédentes, **caractérisé par le fait que** le nombre des corps pulvérulents compactés convoyés est détecté en vue du dosage du matériau de revêtement.

18. Procédé selon l'une des revendications 1 à 16, **caractérisé par le fait que** le poids des corps pulvérulents compactés convoyés est détecté en vue du dosage du matériau de revêtement.

19. Procédé selon l'une des revendications précédentes, **caractérisé par** l'utilisation de corps pulvérulents compactés de constitutions différentes, dont les poudres sont mélangées à l'issue de la dispersion, préalablement à l'amenée vers le dispositif applicateur.

20. Procédé selon la revendication 19, **caractérisé par le fait que** la constitution différente est une couleur différente.

21. Procédé selon l'une des revendications précédentes, **caractérisé par** la présence de plusieurs dispositifs à l'aide desquels les corps pulvérulents compactés peuvent être dispersés, sachant qu'un dispositif opère en mode dispersion, un dispositif opère en mode nettoyage et un dispositif opère en mode alimentation, respectivement.

22. Procédé selon l'une des revendications précédentes, **caractérisé par** l'engagement, lors de la variation du matériau de revêtement entre le dernier corps pulvérulent compacté d'un premier type, et le premier corps pulvérulent compacté d'un second type, d'au moins un corps de dissociation offrant au moins une propriété pouvant être détectée à distance.

23. Procédé selon la revendication 22, **caractérisé par le fait que** le corps de dissociation est désengagé, à l'issue du convoyage, entre des corps pulvérulents compactés de types différents.

24. Procédé selon la revendication 22, **caractérisé par le fait que** le corps de dissociation est dispersé en une poudre, tout comme les corps pulvérulents compactés, et est délivré par l'intermédiaire du dispositif applicateur.

25. Procédé selon l'une des revendications précédentes, **caractérisé par le fait qu'**il est prévu pour le laquage d'objets.

26. Installation de revêtements d'objets, comprenant
- un dispositif applicateur (6 ; 106) qui délivre le matériau de revêtement sous forme pulvérulente ;
- un dispositif de compactage dans lequel la poudre, se présentant sous une forme pulvérulente de répartition granulométrique adéquate, est compactée en des corps pulvérulents d'une taille d'au moins un millimètre ;
- un dispositif d'amenée (10) qui achemine ledit matériau de revêtement vers ledit dispositif applicateur (6 ; 106), à partir d'au moins un récipient de réserve dans lequel les corps pulvérulents compactés sont stockés ; sachant que
- ledit dispositif d'amenée (10) est agencé de manière à convoyer le matériau de revêtement sous la forme de corps pulvérulents compactés ; et
- qu'un dispositif de dispersion (18 ; 118), prévu à l'extrémité dudit dispositif d'amenée (10) qui est tournée vers ledit dispositif applicateur (6 ; 106), disperse les corps pulvérulents compactés en une poudre, de façon telle que
- ladite poudre présente de nouveau pour l'essentiel, au niveau dudit dispositif applicateur (6 ; 106), la répartition granulométrique qu'elle présentait avant le compactage.

27. Installation selon la revendication 26, **caractérisée par le fait que** le dispositif de compactage comprend une presse.

28. Installation selon la revendication 26 ou 27, **caractérisée par le fait que** le dispositif de compactage comprend une source de chaleur.

29. Installation selon l'une des revendications 26 à 28, **caractérisée par le fait que** le dispositif de compactage comprend un dispositif d'adjonction de liant, qui ajoute un liant au matériau pulvérulent de revêtement devant être compacté.

30. Installation selon l'une des revendications 26 à 29, **caractérisée par le fait que** le dispositif d'amenée (10) comprend un dispositif convoyeur hydraulique.

31. Installation selon l'une des revendications 26 à 29, **caractérisée par le fait que** le dispositif d'amenée (10) comprend un dispositif convoyeur pneumatique.

32. Installation selon l'une des revendications 26 à 29, **caractérisée par le fait que** le dispositif d'amenée (10) comprend un dispositif convoyeur mécanique.

33. Installation selon l'une des revendications 26 à 32, **caractérisée par le fait que** le dispositif de dispersion (18) comprend au moins un mécanisme de broyage (18a, 18b, 18c).

34. Installation selon l'une des revendications 26 à 33, **caractérisée par le fait que** le dispositif de dispersion comprend au moins une source d'énergie extérieure.

35. Installation selon la revendication 34, **caractérisée par le fait que** l'énergie extérieure se présente comme un rayonnement électromagnétique ou comme des ultrasons.

36. Installation selon l'une des revendications 26 à 35, **caractérisée par le fait que** le dispositif de dispersion (18) comprend au moins un vibreur.

37. Installation selon l'une des revendications 26 à 36, **caractérisée par le fait que** le dispositif de dispersion (18) comprend au moins un dispositif d'adjonction de solvants, qui ajoute des solvants aux corps pulvérulents compactés.

38. Installation selon l'une des revendications 26 à 37, **caractérisée par le fait qu'**elle comprend un dispositif de comptage du nombre des corps pulvérulents compactés acheminés par le dispositif d'amenée (10).

39. Installation selon l'une des revendications 26 à 38, **caractérisée par le fait qu'**elle comprend un dispositif (12) de pesage du poids des corps pulvérulents compactés acheminés par le dispositif d'amenée (10).

40. Installation selon l'une des revendications 26 à 39, **caractérisée par** la présence, entre le dispositif de dispersion (18) et le dispositif applicateur (6), d'un dispositif mélangeur qui mélange la poudre obtenue à partir de corps pulvérulents compactés de types différents.

41. Installation selon l'une des revendications 26 à 40, **caractérisée par** la présence de plusieurs dispositifs (18a, 18b, 18c) par lesquels les corps pulvérulents compactés peuvent être dispersés, sachant qu'un dispositif opère en mode dispersion, un dispositif opère en mode nettoyage et un dispositif opère en mode alimentation, respectivement.

42. Installation selon l'une des revendications 26 à 41, **caractérisée par** la présence d'un dispositif (21, 22) d'engagement de corps de dissociation permettant d'engager, entre des corps pulvérulents compactés de types différents, au moins un corps de dissociation offrant au moins une propriété pouvant être détectée à distance.

43. Installation selon l'une des revendications 26 à 42, **caractérisée par le fait que** le dispositif de dispersion (118) et le dispositif applicateur (106) sont regroupés en un ensemble structurel unitaire.

44. Installation selon la revendication 43, **caractérisée par le fait que** le dispositif de dispersion (118) est un mécanisme de broyage, et le dispositif applicateur (106) est un atomiseur tournant à grande vitesse ; et **par le fait que** ledit mécanisme de broyage (118), et ledit atomiseur (106) tournant à grande vitesse, peuvent être entraînés par le même moteur.

45. Installation selon l'une des revendications 26 à 44, **caractérisée par le fait qu'**elle est prévue pour le laquage d'objets.
